Europäisches Patentamt

(19) European Patent Office

Office européen des brevets

(11) Publication number: **0 062 397**
**B1**

(12) **EUROPEAN PATENT SPECIFICATION**

(45) Date of publication of patent specification: **23.04.86**

(21) Application number: **82300677.0**

(22) Date of filing: **11.02.82**

(51) Int. Cl.⁴: **F 16 D 13/68,** F 16 F 15/12

(54) **Extended travel vibration damper assembly.**

(30) Priority: **27.03.81 US 248116**

(43) Date of publication of application:
**13.10.82 Bulletin 82/41**

(45) Publication of the grant of the patent:
**23.04.86 Bulletin 86/17**

(84) Designated Contracting States:
**DE FR GB IT SE**

(56) References cited:
**FR-A-2 393 199**
**GB-A-2 034 004**
**US-A-4 139 995**

(73) Proprietor: **BORG-WARNER CORPORATION**
**200 South Michigan Avenue**
**Chicago Illinois 60604 (US)**

(72) Inventor: **Lamarche, Paul Emile**
**47991 Burton**
**Utica Michigan 48087 (US)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

# Description

This invention relates to a vibration damper assembly.

In a manual transmission employing a friction clutch in the drive train between the engine and transmission, a torsional vibration damper is conventionally inserted in the clutch assembly to neutralize the torsional vibrations emanating from the engine which would otherwise result in undesirable characteristics in the transmission. The torque converter of an automatic vehicle transmission effectively hydraulically dampens the torsional vibrations in the system without a separate damper assembly. However, if a lock-up clutch is inserted in the torque converter to provide a direct drive between the impeller and turbine of the torque converter to reduce slippage and increase efficiency at higher speeds, the hydraulic damping action of the torque converter is obviated, and a mechanical damper is again required in the lock-up clutch.

In GB—A—2034004 of which Borg-Warner Corporation is the applicant and representing the precharacterizing part of claim 1, there is described a torsional vibration damper assembly for use in a torsional coupling or clutch assembly and which comprises an internally splined hub having an integral radial flange and three circumferentially equally spaced radially extending hub arms from the radial flange, a pair of equalizers journalled on the hub on opposite sides of the flange, and a torque input housing enclosing the hub and equalizers and taking the form of a pair of spring retainer plates which are secured together at their peripheries at which they are further secured to torque input means. Each retainer plate has three circumferentially equally spaced drive straps defining elongated arcuate slots, the hub arms extending between and being axially aligned with the drive straps. Each equalizer has three circumferentially equally spaced radially extending arms with the arms of the two equalizers alternating between the hub arms. The arrangement provides for a group of three damper spring sets located between each pair of adjacent hub arms and the equalizer arms disposed therebetween. The drive straps are inwardly offset in the path of the damper springs.

Whilst our earlier vibration damper assembly is perfectly satisfactory in use, its construction restricts it to each group of damper springs only comprising three spring sets, each of the outer such spring sets being located between the respective hub arm and adjacent equalizer arm, and the inner spring set being disposed between the two adjacent equalizer arms. Where it is desired to increase the number of damper springs in a damper assembly in the limited space available particularly in a torque converter environment, the designer is faced with the problem of finding room for the desired number and arrangement of components.

The invention as claimed in claim 1 provides a solution to that problem by fashioning the internally splined hub with its integral radial flange and hub arms radially extending therefrom, but instead of journalling the equalizers on the hub itself they are, rather, journalled on a cylindrical guide surface of a forwardly extending flange located on the outer periphery of an annular portion of a spacer cup, the annular portion abutting and being secured to the hub flange. By this arrangement, an extra equalizer can be provided with the three equalizers journalled on the guide surface of the spacer cup flange. Thereby, an additional spring set can be provided between each adjacent pair of hub arms and specifically located between the arm of the extra equalizer and the adjacent equalizer arm, so that each group of damper springs comprises four damper spring sets.

The advantage of the invention is that the designer has greater design flexibility: the use of the spacer cup enables the floating equalizers and springs to be located in favourable positions to achieve the desired rate and deflection, while avoiding interference with other components. By providing an extra spring set in each group, the springs may be of lower rate and yet still give the same relatively high amplitude deflection between the driving and driven members as our aforementioned damper assembly.

Specifically, the three groups of spring sets act in parallel with one another with the four damper springs of each group acting in series in that group, giving and effective extended travel for the damper.

In order that the invention may be well understood there will now be described an embodiment thereof, given by way of example, with reference to the accompanying drawings, in which:

Figure 1 is a rear elevational view with portions broken away of a vibration damper assembly embodying the present invention,

Figure 2 is a cross sectional view taken on the irregular line 2—2 of Figure 1;

Figure 3 is a partial rear elevation view of the centrally located floating equalizer;

Figure 4 is a cross sectional view taken on the line 4—4 of Figure 3;

Figure 5 is a partial rear elevational view of an end equalizer;

Figure 6 is a cross sectional view taken on the line 6—6 of Figure 5;

Figure 7 is a rear elevational view of the rear spring retainer plate;

Figure 8 is a partial rear elevational view of the front spring retainer plate;

Figure 9 is a front plane view of the hub plate assembly; and

Figure 10 is a cross sectional view taken on the irregular line 10—10 of Figure 9.

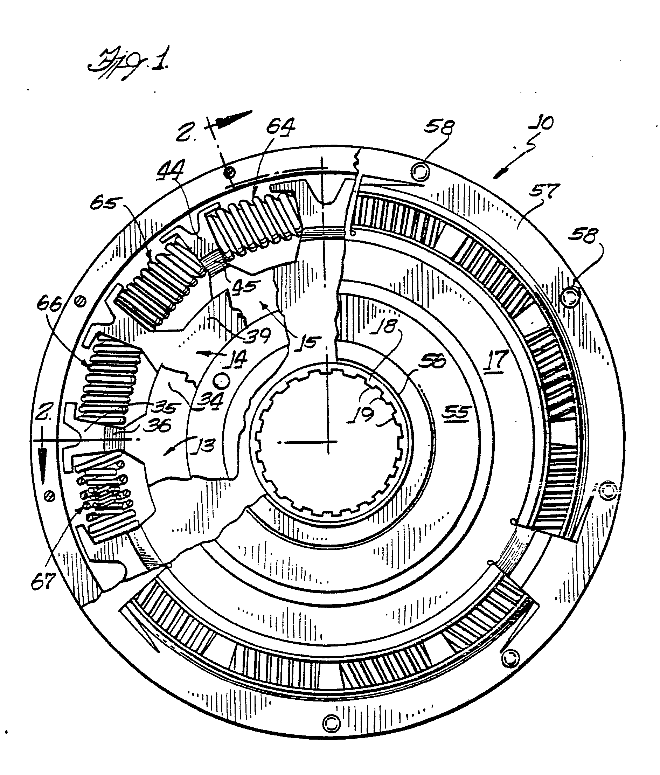

Referring first to Figures 1 and 2, a torsional vibration damper assembly 10 is shown secured to a torque input member, such as a clutch plate 11 carrying one or two friction linings (not shown) for a clutch assembly. The damper assembly includes a hub 12, a plurality of floating equalizers 13, 14, 15 and a housing formed of a pair of spring retainer plates 16 and 17.

The hub 12 includes a barrel 18 having a central passage with internal splines 19 adapted to receive the splined end of a transmission input shaft or the exterior splined surface of a torque converter turbine hub (not shown). A hub flange 21 extends radially outwardly from one end of the barrel 18 (Figures 9 and 10) and terminates in three circumferentially equally spaced hub arms 22; each arm being forwardly offset at 23 with opposed spring engaging surfaces 24, 24 and terminating in circumferentially oppositely extending fingers 25, 25. On the forward surface of the flange 21 is secured by rivets 26 a generally cup-shaped guide ring or spacer cup 27 having an annular portion 28 abutting the hub flange, an outer forwardly extending flange 29 which is pierced at a plurality of circumferentially equally spaced locations 31 to provide arcuate cylindrical segments acting as a guide surface for the floating equalizers 13, 14, 15. The inner edge 32 of the ring or spacer cup 27 is forwardly offset to define a central opening 33 axially aligned with the splined opening of the hub barrel 18.

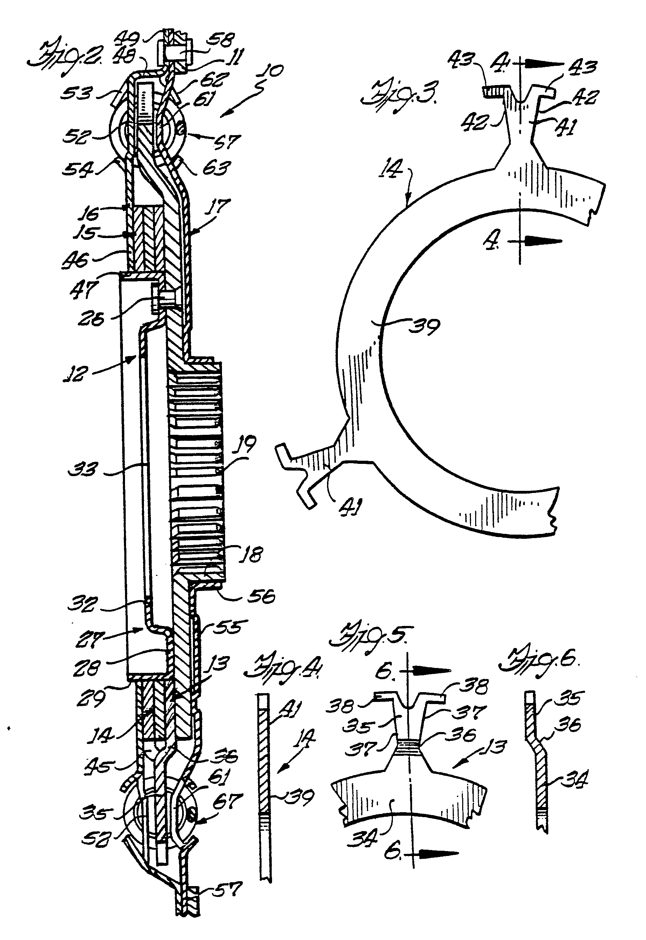

The floating equalizer 13 (Figures 5 and 6) includes an annular body or ring 34 journalled on the cup spacer 27 and having three circumferentially equally spaced arms 35 forwardly offset at 36 and provided with oppositely disposed spring engaging surfaces 37, 37 terminating in circumferentially oppositely extending fingers 38. The central equalizer 14 (Figures 3 and 4) is substantially flat with an annular body 39 and three radial arms 41 having diverging spring engaging edges 42, 42 terminating in fingers 43. The equalizer 15 is substantially identical to equalizer 13 except the arms 44 are offset rearwardly at 45.

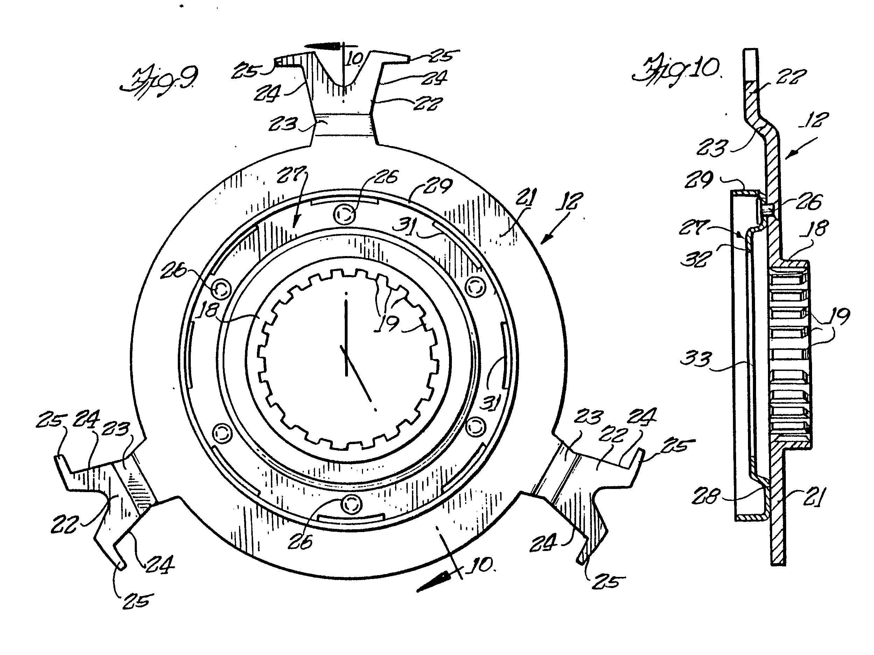

The front spring retainer plate 16 (Figure 8) has a substantially flat body 46 with a central opening 47 receiving the outer flange 29 of the spacer cup 27 and a rearwardly extending peripheral portion 48 terminating in a radial lip 49. Three arcuate slots 51 are formed adjacent the portion 48 separated by three inwardly offset drive straps 52. The slots 51 are defined by outer forwardly and inwardly inclined spring retaining lips 53 and by inner forwardly and outwardly inclined lips 54.

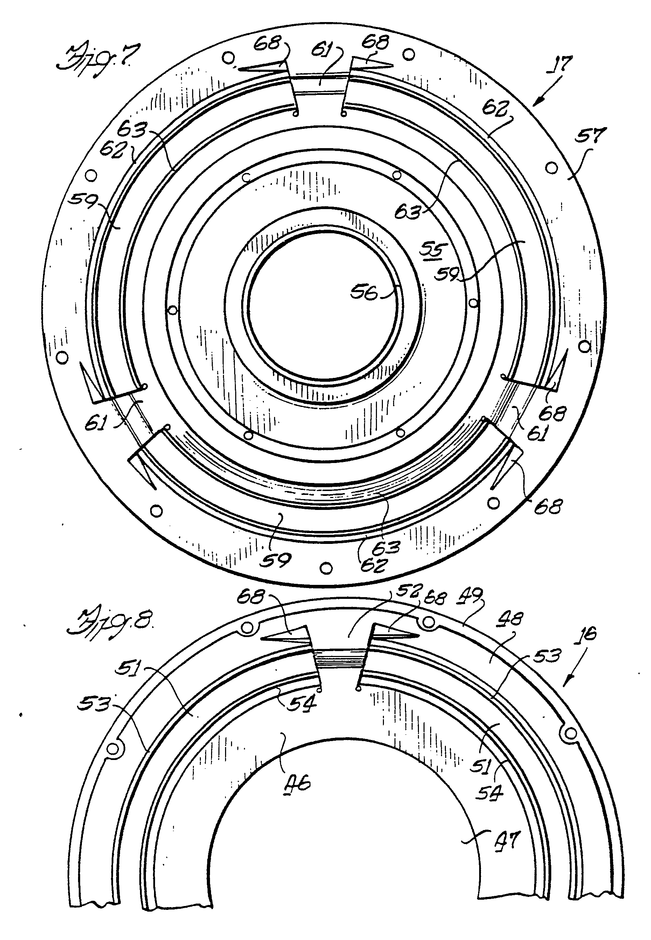

The rear spring retainer plate 17 (Figure 7) has a flat body 55 generally parallel to the hub flange 21 with a rearwardly extending flange 56 encompassing the hub barrel 18. The outer edge 57 of plate 17 abuts the lip 49 of plate 16 and is secured thereto and to the clutch plate 11 by rivets 58. Three circumferentially equally spaced arcuate slots 59 are separated by inwardly offset drive straps 61; the slots and straps being axially aligned with the slots 51 and drive straps 52 of the plate 16. The arcuate slots 59 are also defined by outer lips 62 and inner lips 63 to retain damper springs therein.

Four damper spring sets 64, 65, 66 and 67 are positioned within each pair of arcuate slots between adjacent drive straps 52, 61; with one arm of each equalizer being positioned in each slot.

The arms of the equalizers and the hub arms are all located in a common plane between the spring retainer plates 16 and 17, with the hub arms 22 being axially aligned with the pairs of drive straps 52, 61 where torque is not applied.

With the assembly in the position shown in Figure 1, when torque is applied by the clutch plate 11 to the spring retainer plates 16, 17 secured thereto in a counterclockwise direction, the drive straps 52, 61 engage and compress the spring sets 64, which in turn act on the arms 44 of equalizer 15. Movement of equalizer 15 acts to compress the spring sets 65 which act on arms 41 of central equalizer 14, which movement thereof compresses spring sets 66 that act on arms 35 of equalizer 13. Movement of arms 35 compresses spring sets 67 which act on the hub arms 22 to rotate the hub and either rotate the transmission input shaft of a manual clutch or the turbine hub of a torque converter housing a lock-up clutch.

Each spring set may consist of one, two or three concentric compression springs, with the fingers on the hub arms and equalizer arms acting to control the spring sets so they do not buckle or deform radially outwardly. Also, the drive straps 52, 61 have re-entry ramps 68 which both act as retainers for the springs and as inclined planes to prevent outward movement of the springs as the straps are moved away from the hub arms. Also, if desired, a one-way roller clutch may be interposed between the hub barrel 18 splined to the turbine hub and an outer hub body having the hub flange either integral therewith or secured thereto for the purpose of aiding disengagement of the lock-up clutch in the torque converter upon deceleration of the vehicle by the operator.

**Claims**

1. A vibration damper assembly (10) to transmit torque between driving and driven members, comprising an input member (11), a hub means (12), resilient means interposed between the input member (11) and the hub means (12), a pair of spring retainer plates (16, 17) secured together at their peripheries at which they are operatively engaged with the input member (11), the retainer plates (16, 17) being journalled on the hub means (12), each retainer plate (16, 17) having three circumferentially equally spaced inwardly offset drive straps (52, 61) defining elongated arcuate slots (51, 59), the hub means (12) including an internally splined hub barrel (18), a hub flange (21) and three circumferentially equally spaced hub arms (22) extending between and axially aligned with the drive straps (52, 61), floating equalizers (13, 14, 15) journalled on a cylindrical guide surface on the hub means (12), each equalizer (13, 14, 15) having three circumferentially spaced arms (35, 41, 44) lying in substantially the same plane as the hub arms (22), an arm (35, 41, 44) of each equalizer (13, 14, 15) being located between two adjacent hub arms (22), and the resilient means including a group of damper spring sets (64—67) interposed between the retainer plates (16, 17) and between the arms (35, 41, 44) of the equalizers (13, 14, 15) and two adjacent hub arms (22), respectively the drive straps (52, 61) being inwardly offset in the path of said damper spring sets (64—67), characterised in that the hub means (12, 27) includes a spacer cup (27) having an annular portion (28) abutting and secured to the hub flange (21) and providing a forwardly extending flange (29) located in the outer periphery of the annular portion (28) resulting in the said cylindrical guide surface, in that there are three floating equalizers (13, 14, 15) which are journalled on the cylindrical guide surface of the spacer cup (27), and in that the resilient means includes groups of four damper spring sets (64, 65, 66, 67) respectively.

2. A vibration damper assembly as claimed in claim 1, wherein a central one (14) of the equalizers (13, 14, 15) is a flat plate (39) with its arms (41) located in a common plane with the plate (39), and the other two equalizers (13, 15) are positioned on opposite sides of the central equalizer (14) and have inwardly offset arms (35, 44) to lie in the same plane as the arms of the central equalizer (14).

3. A vibration damper assembly as claimed in claim 2, wherein the hub arms (22) are forwardly offset (23) to lie in the same plane as the equalizer arms (35, 41, 44).

4. A vibration damper assembly as claimed in any of the preceding claims, wherein the spacer cup (27) has an inner forwardly offset edge (32) defining a central opening (33) axially aligned with the hub barrel (18), and the outer flange (29) is pierced at a plurality of circumferentially equally spaced locations (31) adjoining the annular portion (28).

5. A vibration damper assembly as claimed in any of the preceding claims, wherein the three groups of spring sets (64, 65, 66, 67) act in parallel with the four spring sets (64, 65, 66, 67) in each group acting in series.

**Patentansprüche**

1. Schwingungsdämpfereinheit (10) zur Übertragung eines Drehmomentes zwischen einem treibenden und einem angetriebenen Element mit einem Eingangselement (11), einer Nabeneinrichtung (12), einer zwischen dem Eingangselement (11) und der Nabeneinrichtung (12) angeordneten elastischen Einrichtung, einem Paar von Federhalteplatten (16, 17), die an ihren Umfängen, an denen sie mit dem Eingangselement (11) in Eingriff stehen, aneinander befestigt und die auf der Nabeneinrichtung (12) gelagert sind, wobei jede Halteplatte (16, 17) drei in Umfangsrichtung in gleichen Abständen angeordnete, einwärts versetzte Antriebsbügel (52, 61) aufweist, die längliche bogenförmige Schlitze (51, 59) begrenzen, und wobei die Nabeneinrichtung (12) einen Innenkeilzylinderabschnitt (18), einen Nabenflansch (21) und drei in Umfangsrichtung in gleichen Abständen angeordnete Nabenarme (22) umfaßt, die sich zwischen den Antriebsbügeln (52, 61) erstrecken und axial zu diesen ausgerichtet sind, und schwimmenden Ausgleichselementen (13, 14, 15), die auf einer zylindrischen Führungsfläche auf der Nabeneinrichtung (12) gelagert sind, wobei jedes Ausgleichselement (13, 14, 15) drei in Umfangsrichtung voneinander beabstandete Arme (35, 41, 44) aufweist, die in im wesentlichen der gleichen Ebene wie die Nabenarme (22) liegen, ein Arm (35, 41, 44) eines jeden Ausgleichselementes (13, 14, 15) zwischen zwei benachbarten Nabenarmen .(22) angeordnet ist und die elastische Einrichtung eine Gruppe von Dämpferfedersätzen (64—67) umfaßt, die jeweils zwischen den Halteplatten (16, 17) und zwischen den Armen (35, 41, 44) der Ausgleichselemente (13, 14, 15) sowie zwei benachbarten Nabenarmen (22) angeordnet sind, wobei die Antriebsbügel (52, 61) in die Bahn der Dämpferfedersätze (64—67) einwärts versetzt sind, dadurch gekennzeichnet, daß die Nabeneinrichtungen (12, 27) einen becherförmigen Abstandshalter (27) aufweist, der einen ringförmigen Abschnitt (28) besitzt, welcher an den Nabenflansch (21) stößt und daran befestigt ist, und einen sich nach vorne erstreckenden Flansch (29) aufweist, der im Außenumfang des ringförmigen Abschnittes (28) vorgesehen ist, was zu der zylindrischen Führungsfläche führt, daß drei schwimmende Ausgleichselemente (13, 14, 15) vorgesehen sind, die auf der zylindrischen Führungsfläche des becherförmigen Abstandselementes (27) gelagert sind, und daß die elastische Einrichtung jeweils Gruppen von vier Dämpferfedersätzen (64, 65, 66, 67) umfaßt.

2. Schwingungsdämpfereinheit nach Anspruch 1, dadurch gekennzeichnet, daß ein mittleres (14) Ausgleichselement (13, 14, 15) eine ebene Platte (39) ist, deren Arme (41) in einer gemeinsamen Ebene mit der Platte (39) angeordnet sind, und daß die anderen beiden Ausgleichselemente (13, 15) auf gegenüberliegenden Seiten des mittleren Ausgleichselementes (14) angeordnet sind und einwärts versetzte Arme (35, 44) aufweisen, die in der gleichen Ebene wie die Arme des mittleren Ausgleichselementes (14) liegen.

3. Schwingungsdämpfereinheit nach Anspruch 2, dadurch gekennzeichnet, daß die Nabenarme (22) bei (23) nach vorne versetzt sind und in der gleichen Ebene wie die Ausgleichselementarme (35, 41, 44) liegen.

4. Schwingungsdämpfereinheit nach einem der vorangehenden Ansprüche, dadurch gekennzeichnet, daß das becherförmige Abstandselement (27) einen inneren, nach vorne versetzten Rand (32) aufweist, der eine mittlere Öffnung (33) begrenzt, welche zum Zylinderabschnitt (18) der Nabe axial ausgerichtet ist, und daß der äußere Flansch (29) an einer Vielzahl von in Umfangsrichtung in gleichen Abständen voneinander angeordneten Stellen (31), die sich den ringförmigen Abschnitt (28) anschließen, durchlöchert ist.

5. Schwingungsdämpfereinheit nach einem der vorangehenden Ansprüche, dadurch gekennzeichnet, daß die drei Gruppen von Federsätzen (64, 65, 66, 67) parallel zueinander wirken und daß die vier Federsätze (64, 65, 66, 67) einer jeden Gruppe in Reihe wirken.

## Revendications

1. Ensemble amortisseur de vibrations (10) pour transmettre un couple entre des organes moteur et mené, comprenant un élément d'entrée (11), un moyen de moyeu (12), un moyen élastique interposé entre l'élément d'entrée (11) et le moyen de moyeu (12), une paire de plaques (16, 17) de retenue de ressorts fixées ensemble à leurs périphéries où elles sont en contact opérationnel avec l'élément d'entrée (11), les plaques de retenue (16, 17) étant montées sur le moyen de moyeu (12), chaque plaque de retenue (16, 17) ayant trois bandes d'entraînement (52, 61) décalées vers l'intérieur, espacées circonférentiellement de la même distance, qui définissent des fentes (51, 52) allongées en forme d'arc, le moyen de moyeu (12) comportant un cylindre (18) de moyeu cannelé intérieurement, un flasque (21) de moyeu et trois bras (22) de moyeu espacées circonférentiellement de la même distance qui s'étendent en étant alignés axialement, entre les bandes d'entraînement (52, 61) des équilibreurs flottants (13, 14, 15) montés sur une surface cylindrique de guidage sur le moyen de moyeu (12), chaque équilibreur (13, 14, 15) ayant trois bras espacés circonférentiellement (35, 41, 44) situés sensiblement dans le même plan que les bras de moyeu (22), un bras (35, 41, 44) de chaque équilibreur (13, 14, 15) étant situé entre deux bras de moyeu contigus (22), et le moyen élastique comportant un groupe de jeux de ressort d'amortisseur (64, 67) interposés entre les plaques de retenue (16, 17) et entre les bras (35, 41, 44) des équilibreurs (13, 14, 15) et deux bras contigus de moyeu (22), respectivement, les bandes d'entraînement (52, 61) étant décalées vers l'intérieur dans le trajet des jeux (64—67) de ressorts d'amortisseur, caractérisé en ce que le moyen de moyeu (12, 27) comporte une coupelle entretoise (27) ayant une partie annulaire (28) en aboutement et fixé au flasque (21) du moyeu et fournissant un flasque s'étendant vers l'avant (19) situé dans la périphérie extérieure de la partie annulaire (28) donnant ladite surface cylindrique de guidage, en ce qu'il y a trois équilibreurs flottants (13, 14, 15) qui sont montés sur la surface cylindrique de guidage de la coupelle entretoise (27), et en ce que le moyen élastique comporte des groupes de quatre jeux de ressorts d'amortisseur (64, 65, 66, 67), respectivement.

2. Ensemble amortisseur de vibrations selon la revendication 1, où un équilibreur central (14) des équilibreurs (13, 14, 15) est une plaque plate (39) avec ses bras (41) situés dans un plan commun avec la plaque (39), et les deux autres équilibreurs (13, 15) sont placés sur les côtés opposés de l'équilibreur central (14) et comportent des bras décalés vers l'intérieur (35, 44) afin d'être situés dans le même plan que les bras de l'équilibreur central (14).

3. Ensemble amortisseur de vibrations selon la revendication 2, où les bras (22) du moyeu sont décalés vers l'avant (23) pour être situés dans le même plan que les bras d'équilibreur (35, 41, 44).

4. Ensemble amortisseur de vibrations selon l'une quelconque des revendications précédentes, où la coupelle entretoise (27) présente un bord intérieur décalé vers l'avant (32) qui définit une ouverture centrale (33) alignée axialement avec le cylindre (18) du moyeu et le flasque extérieur (29) est percé à une pluralité d'emplacements (31) espacés circonférentiellement de la même distance qui sont contigus à la partie annulaire (28).

5. Ensemble amortisseur de vibrations selon l'une quelconque des revendications précédentes, où les trois groupes de jeux de ressorts (64, 65, 66, 67) agissent en parallèle, avec les quatre jeux de ressorts (64, 65, 66, 67) de chaque groupe agissant en série.

Fig. 1

Fig. 2.
Fig. 3.
Fig. 4.
Fig. 5.
Fig. 6.

Fig.7

68 61 68 17

62 57

63

62

59 63

55

59

56

61 68

61

68

59 63 68

62

Fig.8 68 52 68 49

48

51 53 16

53 54

51

46 54

47

*Fig.9*

*Fig.10*

0 062 397